# EUROPEAN PATENT APPLICATION

(11) **EP 3 246 122 A1**
(43) Date of publication of application: **22.11.2017**
(21) Application number: 17000834.6
(22) Date of filing: 16.05.2017
(51) Int. Cl.: B23K 9/09, B23K 9/10

(54) **METHOD AND SYSTEM TO USE COMBINATION FILLER WIRE FEED AND HIGH INTENSITY ENERGY SOURCE FOR WELDING AND ARC SUPPRESSION OF A VARIABLE POLARITY HOT-WIRE**

(30) Priority: 17.05.2016 US 201662337821 P; 06.10.2016 US 201615287448
(71) Applicant: Lincoln Global, Inc., Santa Fe Springs, CA 90670 (US)
(72) Inventor: Peters, Steven R., Huntsburg, OH 44046 (US); Watt, Elliott G., Mentor, OH 44060 (US)
(74) Representative: Grosse Schumacher Knauer von Hirschhausen

(57) **Abstract**

Methods and system (100) of the present invention include hot-wire welding system used in combination with arc welding systems, where the welding system initiates an arc clearing routine in hot-wire welding system. The arc clearing routine includes detection of an arc and then skipping a complete pulse of the hot-wire waveform and initiating the next pulse to determine is consumable separation still exists. Follow-on pulses are repeatedly initiated until it is determined that consumable separation does not exist, at which time the hot-wire operation is continued.

## Description

The present application clams priority to U.S. Provisional Application No. 62/337,821, filed on May 17, 2016, the entirety of which is incorporated herein by reference.

### FIELD OF THE INVENTION

The invention is related to a method of welding according to claims 1 and 8 and to a welding system according to claim 14. Certain embodiments relate to filler wire overlaying applications as well as welding and joining applications. More particularly, certain embodiments relate to systems and methods to utilize a hot-wire deposition process with either a laser or an arc welding process and suppression of an arc in a variable polarity hot-wire operation.

### TECHNICAL BACKGROUND

Recently, advances in hot-wire welding have been achieved. However, some of these processes and systems utilize current waveforms which can interfere with an arc generated by an adjacent arc welding process. Further, additional mixing and agitation of a molten puddle may be needed in certain applications, which may not be able to be achieved by some known processes. Further, in some hot-wire applications which use variable polarity waveforms, it has been discovered that certain arc suppression techniques can adversely interfere with operation of the hot-wire process.

Further limitations and disadvantages of conventional, traditional, and proposed approaches will become apparent to one of skill in the art, through comparison of such approaches with embodiments of the present invention as set forth in the remainder of the present application with reference to the drawings.

### DESCRIPTION

It is an object to overcome the afore mentioned limitations and disadvantages. Especially it is an object to optimize hot wire arc welding operations. This problem is solved by a method of welding according to claims 1 and 8 and by a welding sytem according to claim 14. Preferred embodiments of the invention are subject of the subclaims. Embodiments of the present invention comprise a system and method to clad, overlay, join or weld using a hot wire deposition process in which the hot-wire waveform is synchronized with a tandem arc welding waveform. Further embodiments of the systems and methods described herein are directed to an arc suppression technique in variable polarity hot-wire deposition operations.

These and other features of the claimed invention, as well as details of illustrated embodiments thereof, will be more fully understood from the following description and drawings.

### BRIEF DESCRIPTION OF THE DRAWINGS

The above and/or other aspects of the invention will be more apparent by describing in detail exemplary embodiments of the invention with reference to the accompanying drawings, in which:
FIG. 1 is a diagrammatical representation of an exemplary embodiment of a hot-wire and laser system;
FIG. 2 is a diagrammatical representation of an exemplary embodiment of a hot-wire and arc welding system;
FIG. 3 is a further diagrammatical representation of an exemplary embodiment of a hot-wire power supply and a system in which it is utilized;
FIG. 4 is a diagrammatical representation of exemplary AC voltage and current waveforms for a hot-wire process;
FIG. 5 is a diagrammatical representation of an exemplary hot-wire and GTAW arc welding process;
FIG. 6 is a diagrammatical representation of an exemplary hot-wire current waveform;
FIGs. 7A to 7C are diagrammatical representations of exemplary hot-wire and arc welding current waveforms;
FIG. 8 is a diagrammatical representation of an exemplary embodiment of the present invention showing an AVC control system.
FIG. 9 is a diagrammatical representation of current and voltage waveforms in a hot-wire system where an arc event occurs and the arc adversely interferes with the process; and ; and
FIG. 10 is a diagrammatical representation of exemplary current and voltage waveforms of an exemplary embodiment of an arc suppression and current restart process.

### DETAILED DESCRIPTION

Exemplary embodiments of the invention will now be described below by reference to the attached Figures. The described exemplary embodiments are intended to assist the understanding of the invention, and are not intended to limit the scope of the invention in any way. Like reference numerals refer to like elements throughout.

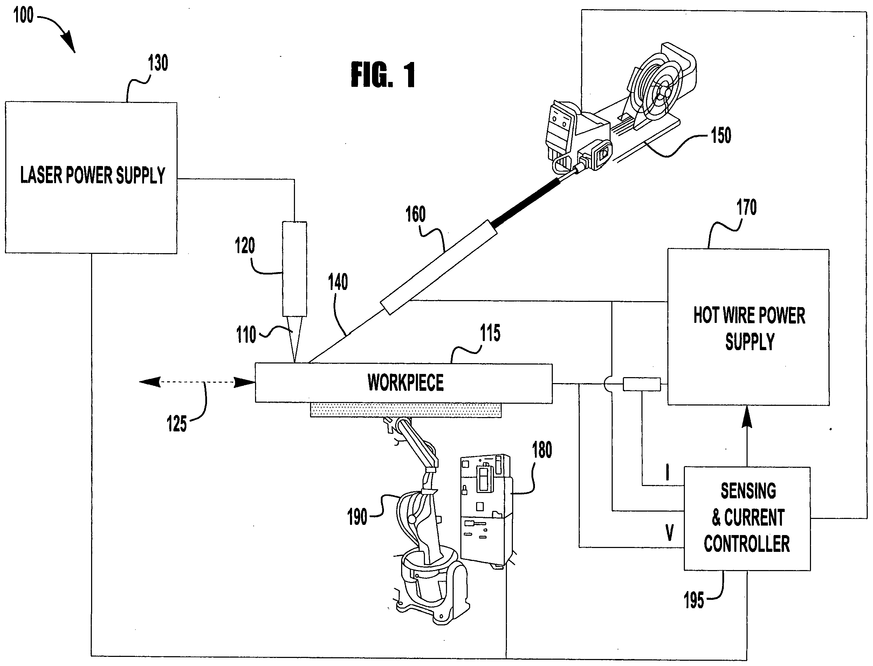

FIG. 1 illustrates a functional schematic block diagram of an exemplary embodiment of a combination filler wire feeder and energy source system 100 for performing any of brazing, cladding, building up, filling, hard-facing overlaying, and joining/welding applications. The system 100 includes a laser subsystem capable of focusing a laser beam 110 onto a workpiece 115 to heat the workpiece 115. The laser subsystem is a high intensity energy source. The laser subsystem can be any type of high energy laser source, including but not limited to carbon dioxide, Nd:YAG, Yb-disk, YB-fiber, fiber delivered or direct diode laser systems. Further, other types of laser systems can be used if they have sufficient energy. Other embodiments of the system may include at least one of an electron beam, a plasma arc welding subsystem, a gas tungsten arc welding subsystem, a gas metal arc welding subsystem, a flux cored arc welding subsystem, and a submerged arc welding subsystem serving as the high intensity energy source. The following specification will repeatedly refer to the laser system, beam and power supply, however, it should be understood that this reference is exemplary as any high intensity energy source may be used. For example, a high intensity energy source can provide at least 500 W/cm². The laser subsystem includes a laser device 120 and a laser power supply 130 operatively connected to each other. The laser power supply 130 provides power to operate the laser device 120.

The system 100 also includes a hot filler wire feeder subsystem capable of providing at least one resistive filler wire 140 to make contact with the workpiece 115 in the vicinity of the laser beam 110. Of course, it is understood that by reference to the workpiece 115 herein, the molten puddle is considered part of the workpiece 115, thus reference to contact with the workpiece 115 includes contact with the puddle. The hot filler wire feeder subsystem includes a filler wire feeder 150, a contact tube 160, and a hot wire power supply 170. During operation, the filler wire 140, which leads the laser beam 110, is resistance-heated by electrical current from the hot wire welding power supply 170 which is operatively connected between the contact tube 160 and the workpiece 115. In accordance with an embodiment of the present invention, the hot wire welding power supply 170 is a pulsed direct current (DC) power supply, although alternating current (AC) or other types of power supplies are possible as well. The wire 140 is fed from the filler wire feeder 150 through the contact tube 160 toward the workpiece 115 and extends beyond the tube 160. The extension portion of the wire 140 is resistance-heated such that the extension portion approaches or reaches the melting point before contacting a weld puddle on the workpiece. The laser beam 110 serves to melt some of the base metal of the workpiece 115 to form a weld puddle and also to melt the wire 140 onto the workpiece 115. The power supply 170 provides a large portion of the energy needed to resistance-melt the filler wire 140. The feeder subsystem may be capable of simultaneously providing one or more wires, in accordance with certain other embodiments of the present invention. For example, a first wire may be used for hard-facing and/or providing corrosion resistance to the workpiece, and a second wire may be used to add structure to the workpiece.

The system 100 further includes a motion control subsystem capable of moving the laser beam 110 (energy source) and the resistive filler wire 140 in a same direction 125 along the workpiece 115 (at least in a relative sense) such that the laser beam 110 and the resistive filler wire 140 remain in a fixed relation to each other. According to various embodiments, the relative motion between the workpiece 115 and the laser/wire combination may be achieved by actually moving the workpiece 115 or by moving the laser device 120 and the hot wire feeder subsystem. In FIG. 1, the motion control subsystem includes a motion controller 180 operatively connected to a robot 190. The motion controller 180 controls the motion of the robot 190. The robot 190 is operatively connected (e.g., mechanically secured) to the workpiece 115 to move the workpiece 115 in the direction 125 such that the laser beam 110 and the wire 140 effectively travel along the workpiece 115. In accordance with an alternative embodiment of the present invention, the laser device 110 and the contact tube 160 may be integrated into a single head. The head may be moved along the workpiece 115 via a motion control subsystem operatively connected to the head.

In general, there are several methods that a high intensity energy source/hot wire may be moved relative to a workpiece. If the workpiece is round, for example, the high intensity energy source/hot wire may be stationary and the workpiece may be rotated under the high intensity energy source/hot wire. Alternatively, a robot arm or linear tractor may move parallel to the round workpiece and, as the workpiece is rotated, the high intensity energy source/hot wire may move continuously or index once per revolution to, for example, overlay the surface of the round workpiece. If the workpiece is flat or at least not round, the workpiece may be moved under the high intensity energy source/hot wire as shown if FIG. 1. However, a robot arm or linear tractor or even a beam-mounted carriage may be used to move a high intensity energy source/hot wire head relative to the workpiece.

The system 100 further includes a sensing and current control subsystem 195 which is operatively connected to the workpiece 115 and the contact tube 160 (i.e., effectively connected to the output of the hot wire power supply 170) and is capable of measuring a potential difference (i.e., a voltage V) between and a current (I) through the workpiece 115 and the hot wire 140. The sensing and current control subsystem 195 may further be capable of calculating a resistance value (R=V/I) and/or a power value (P=V*I) from the measured voltage and current. In general, when the hot wire 140 is in contact with the workpiece 115, the potential difference between the hot wire 140 and the workpiece 115 is zero volts or very nearly zero volts. As a result, the sensing and current control subsystem 195 is capable of sensing when the resistive filler wire 140 is in contact with the workpiece 115 and is operatively connected to the hot wire power supply 170 to be further capable of controlling the flow of current through the resistive filler wire 140 in response to the sensing, as is described in more detail later herein. In accordance with another embodiment of the present invention, the sensing and current controller 195 may be an integral part of the hot wire power supply 170.

In accordance with an embodiment of the present invention, the motion controller 180 may further be operatively connected to the laser power supply 130 and/or the sensing and current controller 195. In this manner, the motion controller 180 and the laser power supply 130 may communicate with each other such that the laser power supply 130 knows when the workpiece 115 is moving and such that the motion controller 180 knows if the laser device 120 is active. Similarly, in this manner, the motion controller 180 and the sensing and current controller 195 may communicate with each other such that the sensing and current controller 195 knows when the workpiece 115 is moving and such that the motion controller 180 knows if the hot filler wire feeder subsystem is active. Such communications may be used to coordinate activities between the various subsystems of the system 100.

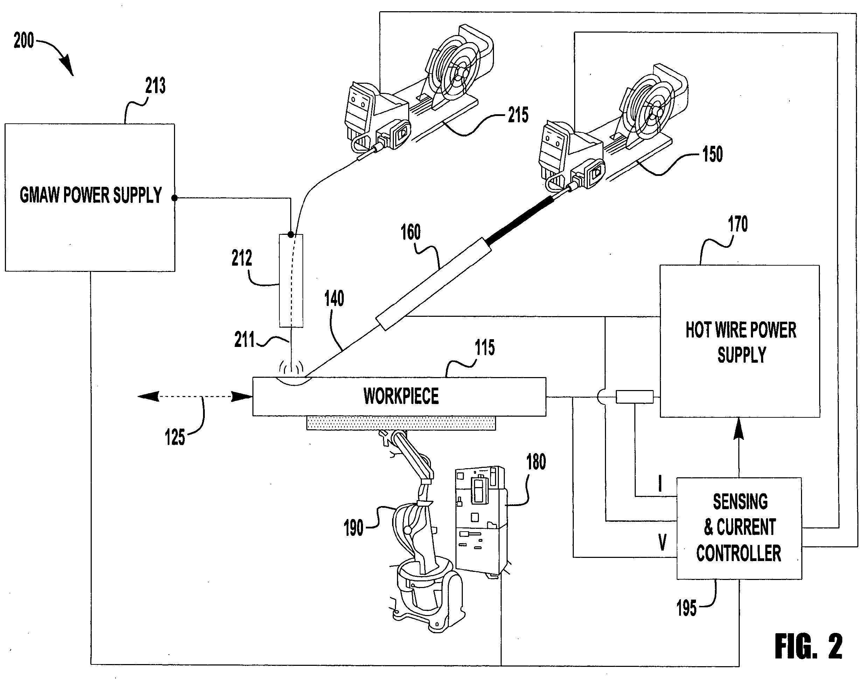

As described above, the high intensity energy source can be any number of energy sources, including welding power sources. An exemplary embodiment of this is shown in Figure 2, which shows a system 200 similar to the system 100 shown in Figure 1. Many of the components of the system 200 are similar to the components in the system 100, and as such their operation and utilization will not be discussed again in detail. However, in the system 200 the laser system is replaced with an arc welding system, such as a GMAW system. The GMAW system includes a power supply 213, a wire feeder 215 and a torch 212. A welding electrode 211 is delivered to a molten puddle via the wire feeder 215 and the torch 212. The operation of a GMAW welding system of the type described herein is well known and need not be described in detail herein. It should be noted that although a GMAW system is shown and discussed regarding depicted exemplary embodiments, exemplary embodiments of the present invention can also be used with GTAW, FCAW, MCAW, and SAW systems, cladding systems, brazing systems, and combinations of these systems, etc., including those systems that use an arc to aid in the transfer of a consumable to a molten puddle on a workpiece. Not shown in Figure 2 is a shielding gas system or sub arc flux system which can be used in accordance with known methods.

Like the laser systems described above, the arc generation systems (that can be used as the high intensity energy source) are used to create the molten puddle to which the hot wire 140 is added using systems and embodiments as described in detail above. However, with the arc generation systems, as is known, an additional consumable 211 is also added to the puddle. This additional consumable adds to the already increased deposition performance provided by the hot wire process described herein. This performance will be discussed in more detail below.

Further, as is generally known arc generation systems, such as GMAW use high levels of current to generate an arc between the advancing consumable and the molten puddle on the workpiece. Similarly, GTAW systems use high current levels to generate an arc between an electrode and the workpiece, into which a consumable is added. As is generally known, many different current waveforms can be utilized for a GTAW or GMAW welding operation, such as constant current, pulse current, etc. However, during operation of the system 200 the current generated by the power supply 213 can interfere with the current generated by the power supply 170 which is used to heat the wire 140. Because the wire 140 is proximate to the arc generated by the power supply 213 (because they are each directed to the same molten puddle, similar to that described above) the respective currents can interfere with each other. Specifically, each of the currents generates a magnetic field and those fields can interfere with each other and adversely affect their operation. For example, the magnetic fields generated by the hot wire current can interfere with the stability of the arc generated by the power supply 213. That is, without proper control and synchronization between the respective currents the competing magnetic fields can destabilize the arc and thus destabilize the process. Therefore, exemplary embodiments utilize current synchronization between the power supplies 213 and 170 to ensure stable operation, which will be discussed further below.

As stated above, magnetic fields induced by the respective currents can interfere with each other and thus embodiments of the present invention synchronize the respective currents. Synchronization can be achieved via various methods. For example, the sensing and current controller 195 can be used to control the operation of the power supplies 213 and 170 to synchronize the currents. Alternatively a master-slave relationship can also be utilized where one of the power supplies is used to control the output of the other. The control of the relative currents can be accomplished by a number of methodologies including the use of state tables or algorithms that control the power supplies such that their output currents are synchronized for a stable operation. This will be discussed further below. For example, a dual-state based system and devices similar to that described in US Patent Publication No. 2010/0096373 can be utilized. US Patent Publication No. 2010/0096373, published on April 22, 2010, is incorporated herein by reference in its entirety.

A more detailed discussion of the structure, use, control, operation and function of the systems 100 and 200 is set forth in at least the U.S. Patent Applications 13/212,025 and 12/352,667 which are assigned to the same owner of the present application, and which are fully incorporated herein by reference in their entirety as they relates to the systems described and discussed herein and alternative embodiments discussed therein, which are not repeated here for efficiency and clarity.

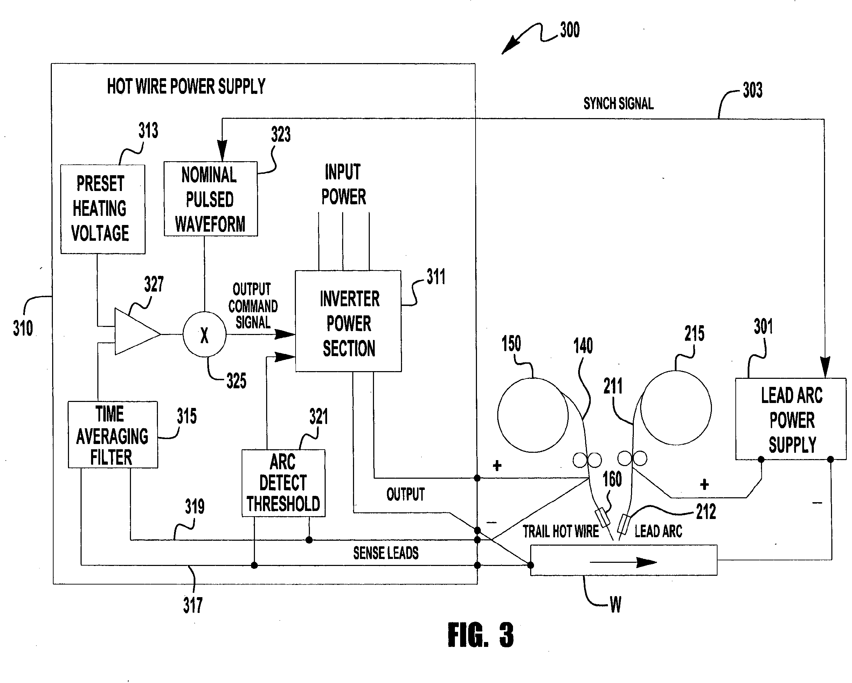

Figure 3 depicts a schematic representation of another exemplary embodiments of a system 300 of the present invention. Like the system 200, the system 300 utilizes a combined hot-wire and arc welding process. The function and operation of the system 300 is similar to that of the system 200, and as such similar functionality will not be repeated. As shown, the system 300 comprises a leading arc welding power supply 301 which leads the trailing hot wire 140. The power supply 301 is shown as a GMAW type power supply, but embodiments are not limited to this as a GTAW type power supply can also be utilized. The welding power supply 301 can be of any known construction. Also depicted is a hot-wire power supply 310 (which can be the same as that shown in Figures 1 and 2) along with some of the components therein. As explained above, it may be desirable to synchronize the current waveforms output from each of the power supplies 301 and 310. As such a synchronization signal 303 can be utilized to ensure that the operation of the power supplies are synchronized, which will be further described below.

The hot-wire power supply 310 comprises an inverter power section 311 which receives input power (which can be either AC or DC) and converts the input power to an output power that is used to heat the wire 140 so that it can be deposited into a puddle on the workpiece W. The inverter power section 311 can be constructed as any known inverter type power supply which is used for welding, cutting or hot-wire power supplies. The power supply also contains a preset heating voltage circuit 313 which utilizes input data related to the process to set a preset heating voltage for the output signal of the power supply 310 so that the wire 140 is maintained at a desired temperature so that it is properly deposited onto the workpiece W. For example, the preset heating voltage circuit 313 can utilize settings such as wire size, wire type and wire feed speed to set the preset heating voltage to be maintained during the process. During operation the output heating signal is maintained such that the average voltage of the output signal, over a predetermined duration of time or number of cycles, is maintained at the preset heating voltage level. In some embodiments, the preset heating voltage level is in the range of 2 to 9 volts. Further, in exemplary embodiments of the present invention, the wire feed speed of the wire 140 can affect the optimal preset heating voltage level, such that when the wire feed speed is low (at or below 200 in/min) the preset heating voltage level is in the range of 2 to 4 volts, whereas if the wire feed speed is high (above 200 in/min) the preset heating voltage level is in the range of 5 to 9 volts. Further, in some exemplary embodiments, when the current is low (at or below 150 amps) the preset heating voltage level is in the range of 2 to 4 volts, whereas if the current is high (above 150 amps) the preset heating voltage level is in the range of 5 to 9 volts. Thus, during operation the power supply 310 maintains the average voltage between the wire 140 and the workpiece W at the preset heating voltage level for the given operation. In other exemplary embodiments, the preset heating voltage circuit 313 can set an average voltage range, where the average voltage is maintained within the preset range. By maintaining the detected average voltage at the preset heating voltage level or within the preset heating voltage range, the power supply 310 provides a heating signal which heats the wire 140 as desired, but avoiding the creation of an arc. In exemplary embodiments of the present invention, average voltage is measured over a predetermined period of time, such that a running average is determined during the process. The power supply utilizes a time averaging filter circuit 315 which senses the output voltage through the sense leads 317 and 319 and conducts the voltage averaging calculations described above. The determined average voltage is then compared to the preset heating voltage as shown in Figure 3.

Of course, in other exemplary embodiments the power supply 310 can use current and/or power preset thresholds to control the output signal of the power supply. The operation of such systems would be similar to the voltage based control described above.

The power supply 310 also contains an arc detect threshold circuit 321 which compares the detected output voltage - through the sense leads 319 and 317 - and compares the detected output voltage with an arc detection voltage level to determine an arcing event has, or will occur, between the wire 140 and the workpiece W. If the detected voltage exceeds the arc detection voltage level the circuit 321 outputs a signal to the inverter power section 311 (or a controller device) which causes the power section 311 to shut off the output power to distinguish the arc, or otherwise prevent its creation. In some exemplary embodiments the arc detection voltage level is in the range of 10 to 20 volts. In other exemplary embodiments the arc detection voltage level is in the range of 12 to 19 volts. In further exemplary embodiments, the arc detection voltage level is determined based on the preset heating voltage level and/or the wire feed speed. For example, in some exemplary embodiments, the arc detection voltage level is in the range of 2 to 5 times the preset heating voltage level. In other exemplary embodiments, the anode and cathode voltage level for any shielding gas being used can affect the preset heating voltage level. In other exemplary embodiments, the anode and cathode voltage level for any shielding gas being used can affect the preset heating voltage level. In some exemplary applications the arc detection voltage will be in the range of 7 to 10 volts, while in other embodiments it will be in the range of 14 to 19 volts. In exemplary embodiments of the present invention, the arc detection voltage will be in the range of 5 to 8 volts higher than the preset heating voltage level.

The power supply 310 also includes a nominal pulsed waveform circuit 323 which generates the waveform to be used by the inverter power section 311 to output the desired heating waveform to the wire 140 and workpiece W. As shown the nominal pulsed waveform circuit 323 is coupled to the arc welding power supply 301 via the synchronization signal 303 so that the output waveforms from each of the respective power supplies are synchronized as described herein.

As shown, the nominal pulsed waveform circuit 323 synchronizes its output signal with the arc welding power supply 301 and outputs a generated heating waveform to a multiplier which also receives an error signal from the comparator 327 as shown. The error signal allows for adjustment of the output command signal to the inverter power section 311 to maintain the desired average voltage as described above.

It should be noted that the above described circuits and basic functionality is similar to that utilized in welding and cutting power supplies and as such the detailed construction of these circuits need not be described in detail herein. Further, it is also noted that some or all of the above functionality can be accomplished via a single controller within the power supply 310.

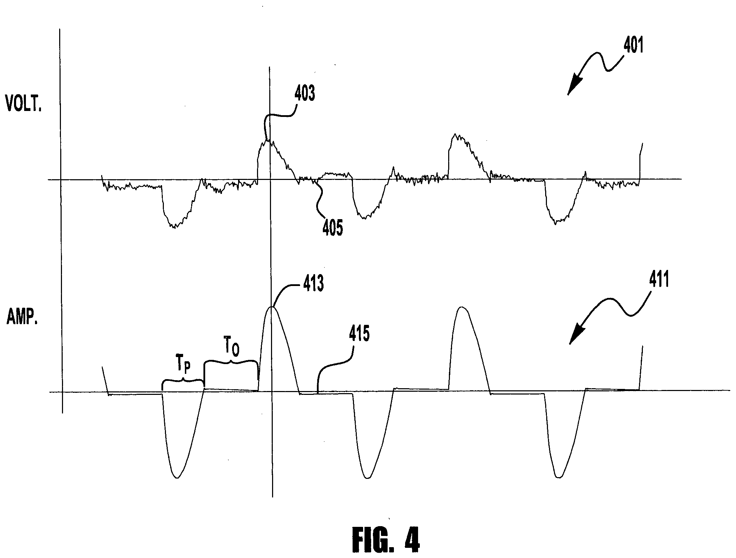

Turning now to Figure 4, which depicts an exemplary voltage 401 and current 411 waveform that can be generated by the hot-wire power supplies disclosed herein. As can be seen each of the voltage 401 and current waveforms 411 are alternating current (AC) where adjacent peaks of the waveforms have opposite polarity. Such hot-wire waveforms can be used with systems as described in each of Figures 1 through 3. However, it has been discovered that in hot-wire processes which use a laser to create the puddle (see e.g., Figure 1) it is sometimes desirable to provide agitation to the puddle which cannot be achieved by use of the laser alone. In such situations, the use of an alternating current waveform 411 provides puddle agitation and oscillation. This puddle movement can aid in reducing porosity, or other defects, and aid in grain refinement in the molten puddle. Thus, in some embodiments of the invention it is desirable to use an AC heating waveform as shown. Of course, it should be noted that embodiments of the present invention are not limited to the wave shapes shown in Figure 4, as other wave shapes can be used. For example, a square wave pulse current profile can also be used.

Further, as shown, in some exemplary embodiments the current is reduced to 0 amps in between current pulses 413. Such a waveform provides active arc suppression to prevent the creation of inadvertent arcing event between the hot-wire 140 and the workpiece. As described above it is desirable to prevent arcing events with the hot-wire 140. As such, in the exemplary current waveform 411 shown, the waveform 411 contains a plurality of 0 amp current periods 415 between adjacent pulses 413. That is, in exemplary embodiments, a current pulse 413 is reduced to 0 amps for a duration To before the following pulse (having a different polarity) is generated. This active arc suppression aids in preventing inadvertent arc events. In exemplary embodiments of the present invention, the 0 amp duration To is a predetermined duration based on the peak pulse current, waveform frequency, and pulse width. The zero current duration will also put out any arc that may have been created in the previous pulse. In exemplary embodiments, the 0 amp duration is in the range of 80 to 120% of the duration Tp of the current pulses 413. In further exemplary embodiments, the 0 amps duration To is larger than the duration Tp of the current pulses 413.

Further, in additional exemplary embodiments the 0 amp duration To can be changed during a hot-wire process to control heat input. That is, the duration To can be decreased to increase the heat input, while the duration To can be increased to decrease the heat input. Thus, in some exemplary embodiments the heat of the wire 140 and/or the puddle can be monitored (see, incorporated priority applications) and based on the detected temperature(s) the hot-wire power supply can adjust the duration of the 0 amp duration To to reach the desired temperature.

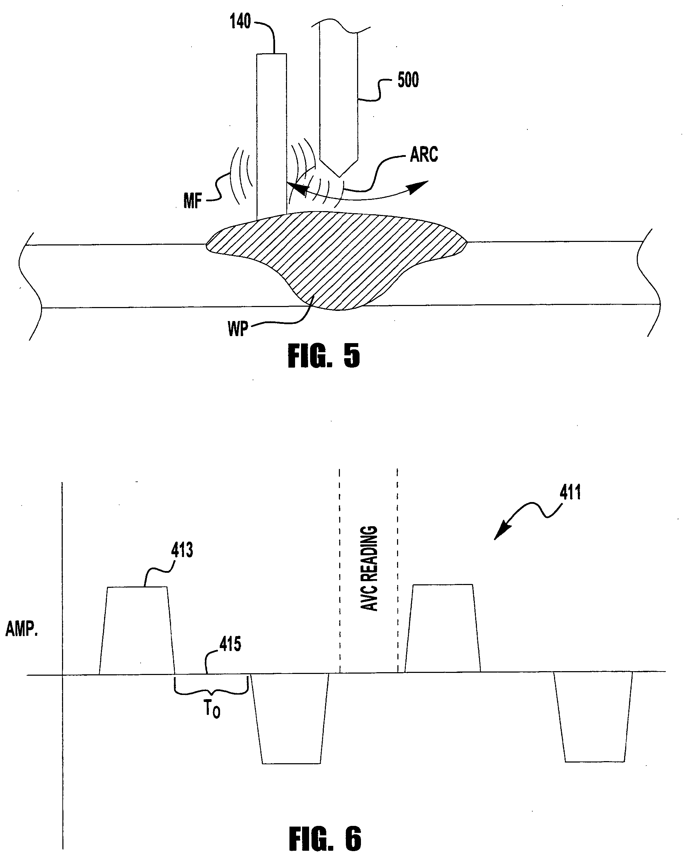

Further, as explained previously, in those embodiments in which an arc welding process is used with the hot-wire process, the arc welding power supply can be either a GMAW or GTAW power supply and process. However, in some exemplary embodiments, if a GTAW process is utilized the GTAW process is controlled such that automatic voltage control (AVC) readings are made only during the 0 amp durations 415 To in the hot-wire waveform 411. It is generally known that during GTAW (TIG) welding many GTAW power supplies take AVC readings during the welding process which measure the voltage across the arc to determine the arc length of the GTAW process, and ultimately aid in controlling the arc length of the GTAW process. It is noted that the construction, function and operation of GTAW-type power supplies and the use of automatic voltage control are well known by those of ordinary skill in the art such that neither need be discussed in any detail herein. For example, an exemplary AVC unit comprises a control unit and a mechanical slide or movement mechanism - to which the torch is coupled, where the control unit obtains a reading of the arc voltage and move the mechanical slide/movement mechanism up or down (and subsequently the torch up or down) to hold the desired voltage. However, it has been discovered that because of the proximity to each other the hot-wire current pulses can affect the arc length of the GTAW arc. This is generally depicted in Figure 5. As shown a GTAW electrode 500 is used to generate an arc between the electrode 500 and the weld puddle WP. However, during a hot-wire current pulse a magnetic field MF is generated which can pull or push the arc. (It is noted that the hot-wire 140 is shown to the side for clarity, but can be positioned at any radial position with respect to the electrode 500). By moving the arc the length of the arc changes and as such any AVC readings taken during the changed arc length period will be affected, and will not accurately reflect the distance between the electrode and the puddle, or otherwise cause inaccurate voltage readings. For example, the AVC reading can show that the GTAW arc length has increased, thus causing the GTAW power supply to react as if the electrode 500 has been pulled away from the puddle. However, when the hot-wire current pulse is turned off or reduced the arc length returns to its normal position and as such the compensation by the GTAW power supply for the "increased" arc length is now not appropriate, adversely affecting the GTAW process. Therefore, embodiments of the present invention synchronize the hot-wire power supply and the GTAW power supply such that the automatic voltage control readings used control the GTAW power supply are taken only during the 0 amp duration To of the hot-wire waveform 411. Specifically, as shown in Figure 6, the AVC reading is only taken during the duration To (when the current is at 0 amps). In some exemplary embodiments, the AVC reading is taken when the current is at 0 amps, but not too close to either of any adjacent current pulses 413. For example, in some exemplary embodiments, the GTAW process AVC reading is taken during the center 80% of the duration To. That is, the AVC reading for the GTAW process is not taken during the during the first and last 10% portions of the duration To, where the first portion is 10% of the duration To following a pulse 413 and the last portion is 10% of the duration preceding a following pulse 413. By utilizing such synchronization between GTAW and hot-wire processes, the GTAW process can maintain its integrity.

Typically, a GTAW welding current is a constant current, and in many applications an AVC circuit or control unit is not part of a standard GTAW power supply. Thus, in some exemplary embodiments of the present application the AVC unit or circuit (not shown for clarity) is a stand-alone unit and is synchronized to the hot wire dead time as described herein. The construction and operation of AVC circuits and units are generally known by those of skill in the art.

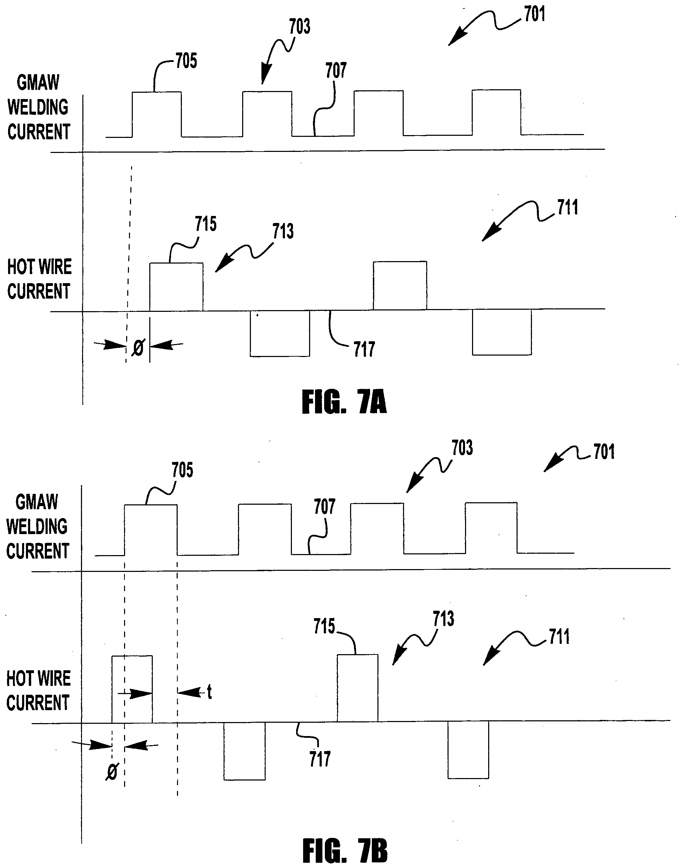

In exemplary embodiments of the invention which utilize a GMAW process with an AC hot-wire process it is also desirable to synchronize the respective waveforms and keep the waveforms generally in phase with each other. It has been discovered that the when the peaks of the relative waveforms are out-of-phase the magnetic field generated by the hot-wire current can have a significant pull on the arc of the GMAW process, especially when the GMAW process is in its background phase - that is during the background arc. This is especially true when using GMAW welding waveforms having lower background levels. For example, when welding different alloys such as stainless and nickel alloys the GMAW pulse parameters use a relatively low background current. The low background currents create arcs with low arc force making them more susceptible to hot-wire pulses. This is particularly true with hot-wire pulses with high peak current levels. Therefore, in exemplary embodiments it can be desirable to synchronize the respective waveforms and generally have them in phase to ensure GMAW arc stability. Some exemplary waveforms are shown in Figures 7A to 7C.

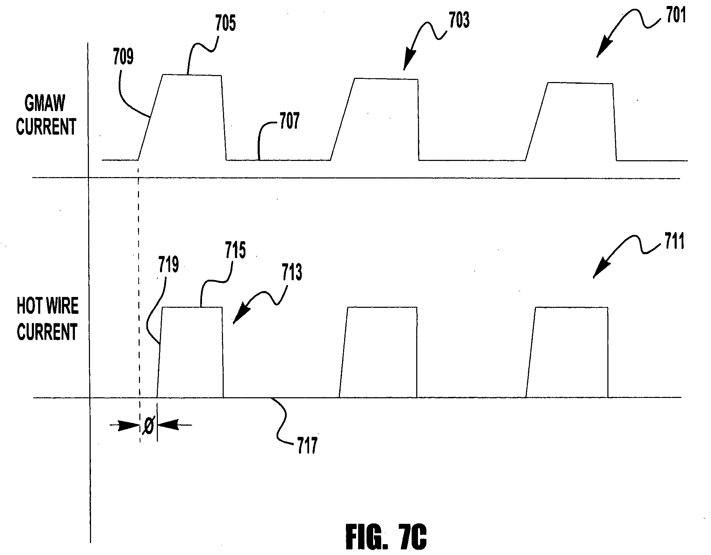

Each of Figures 7A through 7C depict exemplary synchronized current waveforms for a GMAW/hot-wire process as described herein. It should be noted that while each of the respect GMAW waveforms 701 are shown as positive waveforms, they can also be AC waveforms. Additionally, although each of the hot-wire waveforms 711 in Figures 7A and 7B are shown as AC they can also have a single polarity. Further, although the hot-wire waveform 711 in Figure 7C is shown with a single polarity, it can also be an AC waveform. The above alternatives can be utilized without departing from the spirit or scope of the present invention.

Turning now to Figure 7A, a GMAW waveform 701 is shown having a plurality of current pulses 703, each with a peak current level 705. Further, each of the pulses are separated by a background current portion 707. The background current portion can have a nominal current level in the range of 10 to 250 amps. Also shown is a hot-wire current waveform 711 having a plurality of pulses 713. The waveform 711 is AC and each of the pulses 713 have a peak current level 715 and are separated by a 0 amp portion 717 as discussed above. The peak current level 715 of the hot-wire pulses 713 can be in the range of 250 to 500 amps. Additionally, the waveforms are synchronized and in phase such that the phase angle Φ between the waveforms is in the range of 340 to 20 degrees. In some exemplary embodiments, the phase angle Φ is in the range of 355 to 5 degrees, while in other embodiments the phase angle Φ is 0 degrees. By synchronizing the waveforms and utilizing the phase angles discussed herein, embodiments of the present invention aid in preventing the GMAW arc from being overly affected by the hot-wire current waveform.

Figure 7B depicts other exemplary waveforms, where the hot-wire current pulses 713 and synchronized with the GMAW waveform 701 such that the hot-wire pulse peaks 715 precede the GMAW pulse peaks 715, as shown. That is, the hot-wire pulses reach their peak current levels 715 prior to the GMAW pulses reaching their respective peak 705 current levels. In exemplary embodiments, the phase angle Φ between the respective peaks is in the range of 340 to 359 degrees. Additionally, the hot-wire peak current levels 715 end at a time t before the separation of the droplet during the GMAW process. For purposes of clarity the separation of the droplet is depicted in Figure 7B at the end of the GMAW pulses 703, however, it is understood that droplet separation will depend on the waveform being used, and thus may not necessarily be the end of the pulse 703, as depicted. Those of skill in the art generally understand the droplet transfer mechanics of GMAW processes and thus they need not be described in detail herein. As stated above, the peak level 715 of the hot-wire pulses 713 end at a time t before the GMAW droplet separates. In exemplary embodiments, the time t is in the range of 50 to 1000 µs. In other exemplary embodiments, the time t is in the range of 50 to 200 µs. In such embodiments, the droplet flight is not affected (or minimally affected) by hot-wire current.

Figure 7C depicts an additional exemplary embodiment of the present invention. In this exemplary embodiment, the GMAW waveform 701 is synchronized such that each of the pulses 703 begin prior to the hot-wire pulses 713. In exemplary embodiments, the beginning of the GMAW pulses 703 lead the beginning of the hot-wire pulses 713 by a phase angle Φ in the range of 1 to 20 degrees. In other exemplary embodiments, the phase angle Φ is in the range of 300 to 50 degrees. However, although the GMAW pulses lead the hot-wire pulses, the GMAW pulses have a current ramp-up rate 709 which is less than the ramp-up rate 719 of the hot wire pulses 713. For example, for pulse spray processes the ramp rate can be in the range of 350 to 500 A/ms, and for hot-wire the ramp rate can be in the range of 350 to 700 A/ms. By utilizing a slower ramp rate for the hot-wire pulses 713 the GMAW arc can be more resistant to the pull of the hot-wire peak. In further exemplary embodiments, the hot-wire pulses 713 utilize a ramp rate which is higher than that of the GMAW pulse and is such that the hot-wire pulses 713 reach their peak current levels 715 prior to the GMAW pulses 703 reaching their respective peak 705 levels. It should be noted that in some applications the hot wire peak current could significantly affect a low current arc - such as when the arc current is in a low background state. This is due to the interfering magnetic fields. Similarly, a hot-wire current peak can also affect droplet transfer. Thus, in some exemplary embodiments it is beneficial to have the hot-wire current peak during the arc welding peak, but prior to droplet transfer.

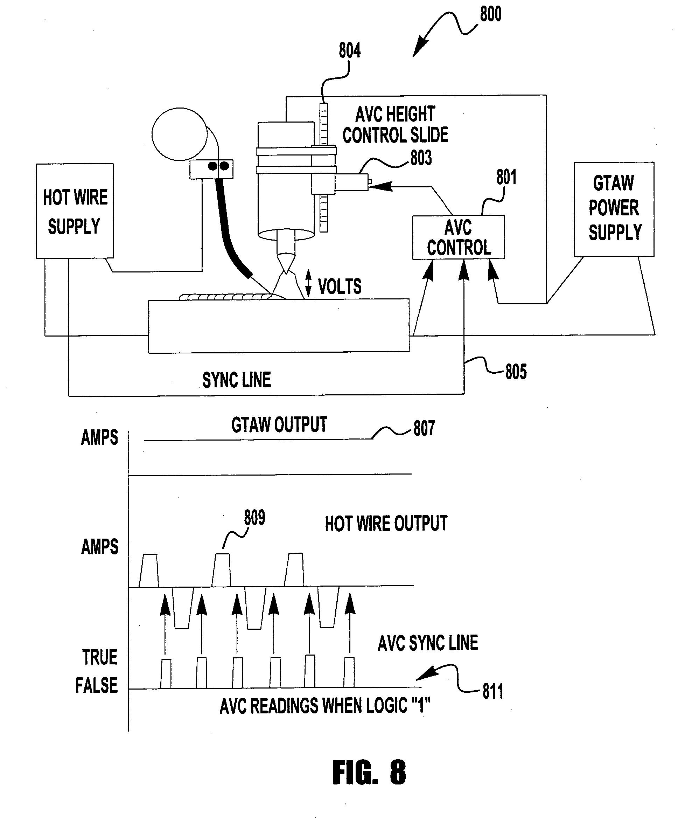

Figure 8 depicts an exemplary AVC system to be used with embodiments of the present invention. The system 800 operates in a manner consistent with the embodiments described and discussed herein. The AVC control unit is coupled to each of the GTAW power supply, the torch and the workpiece. Also, a sync line 805 couples the AVC control circuit 801 to the hot wire power supply. The movement mechanism 804 moves the torch up or down to maintain the arc voltage, as described herein. Also shown in Figure 8 is a GTAW current 807 - which is shown as a constant current and a representative hot-wire current output 809 showing that the AVC detection 811 is synced with the off-time of the hot-wire current output.

As discussed above, synchronization of the respective waveforms is desirable whether utilizing GMAW or GTAW processes in addition to the hot-wire process. The circuits and control methodologies that can be used to synchronize current waveforms are generally known and used in the welding industry. Those methodologies can be similarly employed with the embodiments described herein. As such, a detailed discussion of synchronization techniques and control methodologies will not be repeated herein. Further, the various exemplary systems described herein can use various controller components to control the operations described herein. For example, each of the welding and hot-wire power supplies can be coupled to a common controller which controls and synchronizes each power supply, respectively. Additionally, a master-slave relationship can be utilized where one of the power supplies (for example the GTAW or GMAW power supply) serves as the master power supply and the function of the hot-wire power supply is slaved to the master power supply. Of course, other methodologies for synchronization can be used without departing from the spirit or scope of the present invention.

As explained previously, various tandem combination can be used with a hot-wire deposition process described herein. For example, a GMAW type process can be used (see Figure 2) or a GTAW process can be used (see Figure 5). Further, as described herein the hot-wire current waveform can be AC, thus having both negative and positive polarity portions or pulses. Further, it is generally understood that the generation of an arc by the hot-wire consumable (i.e., between the hot wire and the puddle) can be detrimental to the process and thus in most instances such arcing is not desired. Various techniques, systems and processes have been developed to suppress the generation of an arc between the hot-wire (e.g., see 140 in Fig. 5) and the puddle. Because these processes/systems/methods are sufficiently described in other pending patent applications by the assignee of the present application, those processes will not be described in detail herein.

However, it has been recently discovered that in certain processes/applications some known arc suppression techniques for the hot wire can be detrimental to the hot-wire process such that the process can be compromised and/or may need to be stopped and restarted - which is undesirable. This will be explained further below, along with exemplary embodiments of the present invention used to eliminate the issues with arc suppression described herein. It is further noted that the following discussion is specifically directed to an embodiment of the present invention using a variable polarity hot-wire waveform in a GTAW tandem process. However, exemplary embodiments are not limited to the use of GTAW in tandem (see e.g., Fig. 5) and embodiments described herein can also be used with GMAW, laser, etc.

As explained previously, it has been discovered that in certain applications known arc suppression techniques for a hot-wire current can have operational limitations. For example, when using AC hot wire with a GTAW process it has been discovered that when this type of process is pushed to operate a high speeds and/or deposition rates issues develop with the deposition. That is, it was observed that in some instances the hot-wire consumable (e.g., 140 in Fig. 5) does not deposit properly. For example, the weld bead can lose heat and thus become "cold" causing the consumable to "rope" at deposition. Further, it has also been observed that when a failure mode occurs, such as the generation of an arc because of hot-wire/puddle separation, known arc suppression techniques are unable to properly clear the failure which can cause the creation of spatter, splash the puddle and/or interfere with the tungsten electrode of the GTAW process.

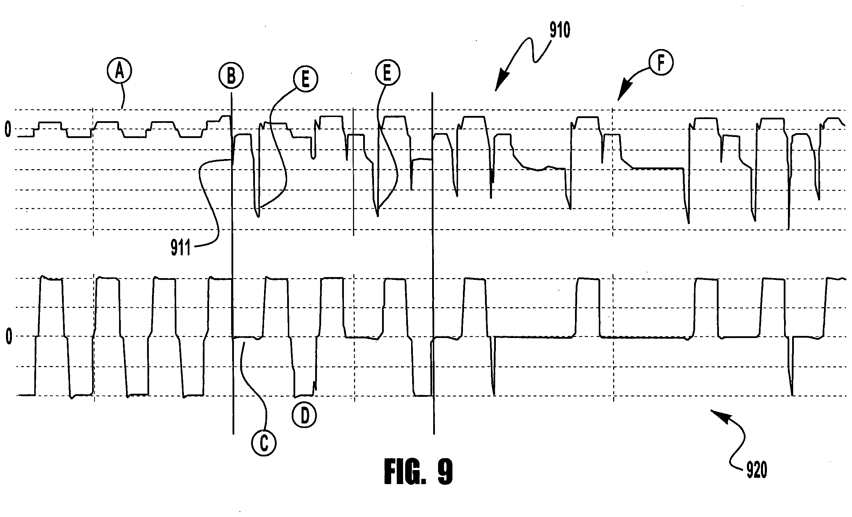

Exemplary voltage and current waveforms of the above described issues are shown in Figure 9. Specifically, Figure 9 depicts an exemplary voltage waveform 910 and current waveform 920 of a variable polarity hot-wire deposition signal, when used in combination with a GTAW arc process. As generally understood, during normal operation the wire 140 is touching the puddle and is, essentially, at the same potential as the molten puddle WP. In exemplary embodiments, the hot wire 140 voltage is about 2 volts from the contact tip 160 of the hot wire process to the workpiece. In many instances when the end of the wire loses contact with the puddle the voltage significantly increases - indicating that the wire has separated from the puddle and that an arc has likely formed. This is not desirable in most instances. With the detection of this increase in voltage, systems can execute an arc suppression routine to eliminate/prevent an arc and have the wire 140 make contact with the puddle again. However, in some applications/instances even though the end of the wire 140 is not in contact with the puddle the end of the wire 140 can be in the plasma plume of a tandem arc welding process, e.g. a GTAW plasma plume. When this occurs the plasma plume provides a path for the hot-wire current to travel to the puddle/workpiece. Because of this, in certain situations, known arc suppression techniques will not adequately or quickly address the lack of contact between the wire 140 and the puddle. This is generally shown in Figure 9.

As shown in Figure 9, a typically AC hot-wire waveform is run with both alternating polarity current and voltage pulses - phase A. At point B a negative polarity voltage spike 911 is detected, which indicates that the wire 140 has lost contact with the puddle. After this detection the current is turned off (in accordance with some known arc suppression techniques) - see C. After the current is turned off, it is turned back on and the normal current pulses are restarted - D. In many instances this should trigger normal operation. However, in instances such as those described above, additional voltage spikes E occur after the arc suppression attempts, and as arc suppression attempts continue the situation degrades and progressively gets worse F - until the process has to be stopped and restarted.

It is understood that when both the tungsten electrode of the GTAW process (e.g., 500 in Fig. 5) and the hot wire 140 are both negative in polarity (the negative half cycle of AC hot wire current waveform), current flows from the puddle into the wire 140 but not through the tungsten 500. Additionally there is a magnetic force from the hot wire current pulling the GTAW arc toward the wire 140. It is believed that this pull causes additional heating on the hot wire 140 making it more likely to arc during the negative half cycle. As explained previously, if/when the wire 140 arcs, arc suppression detects the current flow from the puddle to the wire 140 as a voltage spike (creation of an anode / cathode voltage) and shuts off the hot wire output. If, while the wire is not in contact with the puddle, another negative half cycle is attempted, there is a voltage between the wire 140 and puddle and the arc suppression can detect that voltage.

However when the hot wire 140 is in the positive portion of the waveform 920, there is a path of potential current flow from the wire 140 through the arc and into the tungsten 500. Normally, when the wire 140 is touching the puddle, the magnetic push of the hot wire current pushes the arc plasma away from the hot wire 140, and the shorted connection keeps the voltage low enough that current flows from the hot wire, through the puddle and into the tungsten 500. It is believed that issues begin when the connection between wire 140 and puddle is lost. In this situation, current can flow from the wire 140 (when positive) through the plasma to the tungsten 500 directly. When this occurs, at least two issues result: (1) even though the wire 140 has lost connection the hot wire power source does not detect an arc between the puddle and the wire 140 (anode / cathode voltage), and (2) the current (transferred from wire 140 to the tungsten electrode 500) no longer flows through the puddle robbing the puddle of that heat. As a result, the wire 140 burns back away from the tungsten 500 (due to arc heating) and the puddle becomes cold and ropey. In many instances, only the positive side of the waveform is stable, thus resulting in the need to shut down the process and restart.

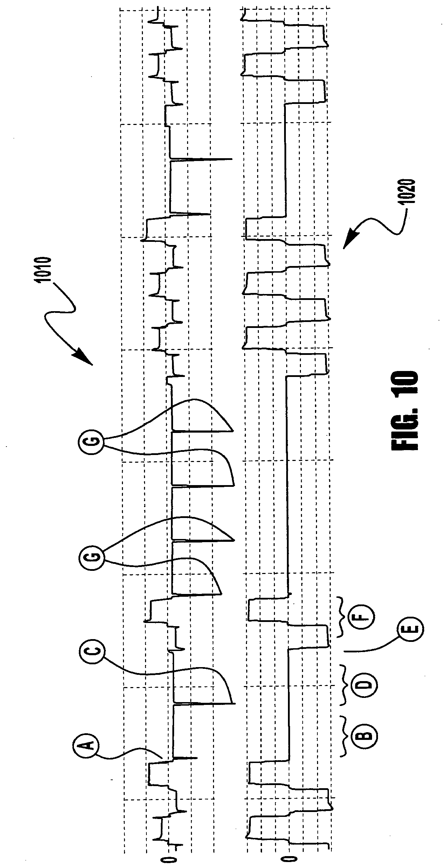

Embodiments of the present invention, address the issues described above, particularly in instances where the GTAW process is a negative polarity process. That is, the GTAW current is negative. To address the issues described above, exemplary embodiments of the present invention sense connection of the wire 140 to the puddle while in the negative polarity. If the wire 140 is connected to the puddle, the negative half cycle of the waveform can run, and if the negative half cycle runs without a voltage spike, then it is determined that the wire 140 is still connected/in contact with the puddle and then the positive half cycle can run. Exemplary voltage and current waveforms depicting this is shown in Figure 10.

Figure 10 depicts a voltage 1010 and current 1020 waveform of an exemplary embodiment of the present invention. As shown in this embodiment, an arc and/or wire/puddle separation is detected, at point A, after a positive pulse and indicated by a negative voltage spike. Based upon this detection the power supply (see, e.g., 170 in Fig. 1) the negative half cycle of the AC pulse waveform is not run or initiated, and the following positive half cycle of the AC pulse waveform is not run - B. After the skipped positive half cycle, the power supply 170 attempts to run the next negative half cycle, but another voltage spike is detected at C. This additional voltage spike indicates that the wire 140 is still not in contact with the puddle and thus the power supply causes the negative half cycle and following positive half cycle to be skipped again - D. After this skip, the power supply 170 initiates the negative half cycle of the current 1020 again - point E - and this time no voltage spike was detected (indicating that the wire 140 is now back in contact with the puddle) and so the negative pulse and following positive half-cycle pulse F are initiated and run. This is repeated as necessary when a voltage spike (e.g. "G") is detected. That is, when a voltage spike is detected, it is an indication of an arc and/or a separation of the wire from the puddle. When this is detected the power supply stops the AC pulsing waveform 1020 and runs the clear routine as described herein. Specifically, when a threshold voltage is detected (indicating a spike) the power supply 170 skips the following two pulses of alternating polarity and initiates the next pulse having the same polarity as the polarity of the arc welding process (e.g., GTAW process). For example, when the GTAW current is a negative current, exemplary embodiments of the clear routine described herein, when an arc or separation is detected, will skip the immediately following negative current pulse and immediately following positive current pulse, and will initiate the next current pulse of the same polarity (negative) of the GTAW current. Stated differently, at least one full waveform cycle (positive and negative pulse) is skipped and the power supply initiates the next following pulse (after this skipped cycle) that has the same polarity as the arc welding process (GTAW or GMAW, etc.) The, the power supply 170 will only initiate the following pulse of the opposite polarity if the pulse of the same polarity as the arc welding polarity is run successful. Thus, if after the a full cycle is skipped and the next pulse of the same polarity is initiated and a voltage spike is detected another full cycle of pulses is skipped and the following pulse of the same polarity is tried again. This is repeated until the pulse of the same polarity as the arc welding current is completed successfully (with a voltage threshold level being exceeded). Only after the pulse of the same polarity of the arc welding current is completed successfully will the power supply 170 initiated the following half-cycle pulse of the opposite polarity. Exemplary embodiments of the present invention alleviate the issues discussed above and aid in optimizing performance of an alternating polarity hot-wire deposition process. Such systems do not allow arcing to run away from the power supply and allow for smooth optimized performance.

In exemplary embodiments, the above threshold can be either a voltage level or can be a dv/dt level. That is, in some exemplary embodiments, the power supply 170 can detect a voltage rate of change and if the rate of change exceeds a threshold rate it is determined that an arcing and/or loss of contact event has, or is about to, occur and runs the clearing function as described. In embodiments, where the threshold is a voltage level the voltage level can be a predetermined level in the power supply 170 or can be a level determined based on input to the power supply 170 or based on the waveforms used. In some exemplary embodiments, the voltage threshold can be at least +/-5 volts. That is, if there is a voltage spike that is at or above 5 volts from a 0 volt level (either positive or negative) the power supply initiates the clear routine as described herein. In other exemplary embodiments, the voltage threshold is at least +/- 3.5 volts. In even further exemplary embodiments, the voltage threshold is at least +/- 7 volts.

In other exemplary embodiments, two full cycles of the AC hot-wire current can be skipped after the detection of the arc/separation, followed by the initiation of the half pulse of the same polarity as the arc welding current. In some exemplary embodiments the number of full cycles that are skipped is determined based on the wire feed speed of the hot-wire 140. That is, if the wire feed speed is at a first rate (for example a WFS rate above a given threshold) the power supply 170 will only skip one full cycle before trying the following same polarity pulse, but of the wire feed speed rate is at a second rate (for example, below a given threshold) the power supply will skip two (or more in some embodiments) full cycles before trying the following same polarity pulse. This WFS threshold level can be predetermined, or based on user input information into the hot wire welding process.

While the above discussion has been focused on the control and operation during a welding operation, similar methodologies should be employed when starting or initiating such a welding operation. That is, when starting exemplary systems described herein the arc welding operation is started first to create an arc and a puddle into which to contact the hot-wire. The hot-wire current is started after the arc welding current and, in exemplary embodiments, the beginning pulse of the hot-wire current has the same polarity as the arc welding current at hot-wire current initiation. That is, if the arc welding waveform has a negative polarity at hot-wire initiation, the hot-wire current should start in the negative polarity. This ensures that the current follows the proper flow path. In some embodiments, if the respective currents had opposite polarities the hot-wire current could flow with contact with the puddle - via the arc plume. In exemplary embodiments, the hot-wire welding current is started in the same polarity after contact with the puddle is detected. This detection can be similar to that described above, for example using voltage, etc. Once detection occurs the hot-wire process is started and continued until separation is detected and then the system responds as described herein.

As discussed above, the initiation, output and control of the respective waveforms and the respective clear functions described above is desirable whether utilizing GMAW or GTAW processes in addition to the hot-wire process. The circuits and control methodologies that can be used to control the waveforms and clear routines as described herein are generally known and used in the welding industry. Those methodologies can be similarly employed with the embodiments described herein. As such, a detailed discussion of control techniques and control methodologies will not be repeated herein. Further, the various exemplary systems described herein can use various controller components to control the operations described herein. For example, each of the welding and hot-wire power supplies can be coupled to a common controller which controls and synchronizes each power supply, respectively. Additionally, a master-slave relationship can be utilized where one of the power supplies (for example the GTAW or GMAW power supply) serves as the master power supply and the function of the hot-wire power supply is slaved to the master power supply. Of course, other methodologies for synchronization/control can be used without departing from the spirit or scope of the present invention.

While the invention has been described with reference to certain embodiments, it will be understood by those skilled in the art that various changes may be made and equivalents may be substituted without departing from the scope of the invention. In addition, many modifications may be made to adapt a particular situation or material to the teachings of the invention without departing from its scope. Therefore, it is intended that the invention not be limited to the particular embodiments disclosed, but that the invention will include all embodiments falling within the scope of the present application.

**Reference numbers**

| | | | |
|---|---|---|---|
| 100 | system | 323 | circuit |
| 110 | laser beam | 327 | comparator |
| 115 | workpiece | 401 | voltage |
| 120 | laser device | 411 | waveform |
| 125 | direction | 413 | pulse |
| 130 | laser power supply | 415 | period |
| 140 | filler wire | 500 | electrode |
| 150 | filler wire feeder | 701 | waveform |
| 160 | contact tube | 703 | pulse |
| 170 | power supply | 705 | level |
| 180 | motion controller | 707 | portion |
| 190 | robot | 711 | waveform |
| 195 | controller | 713 | pulse |
| 200 | system | 715 | level |
| 211 | electrode | 717 | amp portion |
| 212 | torch | 800 | system |
| 213 | power supply | 801 | control circuit |
| 215 | wire feeder | 807 | current |
| 300 | system | 809 | output |
| 301 | power supply | 811 | detection |
| 310 | power supply | 911 | voltage spike |
| 311 | power section | 1010 | voltage |
| 313 | voltage circuit | 1020 | current |
| 317 | sense lead | W | workpiece |
| 319 | sense lead | Φ | angle |
| 321 | circuit | | |

## Claims

1. A method of welding, comprising:
providing a welding current to a welding operation to create a welding arc and a puddle;
providing a hot-wire welding consumable to said puddle;
providing a hot-wire welding waveform to said welding consumable during said welding operation, where said hot-wire welding waveform is an AC waveform having a plurality of complete pulses, where each of said complete pulses comprises a first pulse portion having a first polarity and a second pulse portion having a second polarity;
detecting a separation between said hot-wire welding consumable and said puddle;
turning off said hot-wire welding waveform after said detection;
turning on said hot-wire welding waveform at a next sequential first or second pulse portion, where said next sequential first or second pulse portion has a same polarity as said welding current;
determining if said detected separation still exists; and
if said separation still exists, turning off said hot-wire welding waveform and skipping a next sequential other of said first or second pulse portion, and if said separation does not exist completing said first or second next sequential pulse.

2. The method of claim 1, wherein said welding current is a GTAW welding current, and/or
wherein said welding current is a DC negative welding current.

3. The method of claim 1 or 2, wherein said detection of said separation occurs during said first pulse portion of one of said complete pulses.

4. The method of any of the claims 1 to 3, wherein said first attempted pulse portion has a negative polarity.

5. The method of any of the claims 1 to 4, wherein said welding current is negative and wherein said next sequential first or second pulse portion is negative, and/or
wherein said welding current is pulsed.

6. The method of any of the claims 1 to 5, wherein said initiating and determining steps are repeated a plurality of times until said determining determines that said separation does not exist.

7. The method of any of the claims 1 to 6, wherein said detection of said separation occurs when a determined threshold level is reached, and/or
wherein said detection of said separation occurs when a detected voltage of said hot-wire welding waveform is at least +/-3.5 volts.

8. A method of welding, comprising:
providing a DC welding current to a welding operation to create a welding arc and a puddle;
providing a hot-wire welding consumable to said puddle;
providing a hot-wire welding waveform to said welding consumable during said welding operation, where said hot-wire welding waveform is an AC waveform having a plurality of complete pulses, where each of said complete pulses comprises a negative pulse portion and a positive pulse portion;
detecting a separation between said hot-wire welding consumable and said puddle;
turning off said hot-wire welding waveform after said detection;
initiating a next sequential negative pulse portion after turning off said hot-wire welding waveform, where said initiation of said next sequential negative pulse portion starts at the beginning of the next following complete pulse;
determining if said detected separation still exists; and
if said separation still exists turning off said hot-wire welding waveform and skipping a next sequential positive pulse portion and, and if said separation does not exist completing said next sequential negative pulse portion and said next sequential positive pulse portion.

9. The method of claim 8, wherein said detection of said separation occurs during said negative pulse portion of one of said complete pulses, and/or
wherein said detection of said separation occurs during said positive pulse portion of one of said complete pulses.

10. The method of claim 8 or 9, wherein said DC welding current is negative.

11. The method of any of the claims 8 to 10, wherein said initiating and determining steps are repeated a plurality of times until said determining determines that said separation does not exist.

12. The method of any of the claims 8 to 11, wherein said detection of said separation occurs when a determined threshold level is reached.

13. The method of any of the claims 8 to 12, wherein said detection of said separation occurs when a detected voltage of said hot-wire welding waveform is at least +/-3.5 volts.

14. A welding system (100), comprising:
an arc welding system which provides a welding current to a welding operation to create a welding arc and a puddle; and
a hot-wire welding system which provides a hot-wire welding consumable to said puddle, and a hot-wire welding waveform to said welding consumable during said welding operation, where said hot-wire welding waveform is an AC waveform having a plurality of complete pulses, where each of said complete pulses comprises a negative pulse portion and a positive pulse portion;
wherein said welding system detects a separation between said hot-wire welding consumable and said puddle using a voltage threshold level, and if said separation is detected said welding system turns off said hot-wire welding waveform after said detection;
wherein after turning off said hot-wire welding waveform said system initiates a next sequential pulse portion and determines, during said next sequential pulse portion, if said separation still exists, where said next sequential pulse portion has a same polarity as said welding current; and
wherein, if said welding system determines that said separation still exists, said welding system turns off said hot-wire welding waveform and skips another next sequential pulse portion, and if said separation does not exist said welding system completes said next sequential pulse portion and said another next sequential pulse portion.
